# EUROPEAN PATENT SPECIFICATION

(11) **EP 3 049 777 B1**
(45) Date of publication and mention of the grant of the patent: **02.09.2020**
(21) Application number: 14771868.8
(22) Date of filing: 22.09.2014
(51) Int. Cl.: G01J 3/46, G01J 3/52

(54) **PROCESS FOR PREPARING A COLOUR CHART**
VERFAHREN ZUR HERSTELLUNG EINER FARBTAFEL
PROCÉDÉ DE PRÉPARATION D'UN NUANCIER

(30) Priority: 25.09.2013 EP 13185934
(43) Date of publication of application: 03.08.2016
(73) Proprietor: Akzo Nobel Coatings International B.V., 6824 BM Arnhem (NL)
(72) Inventor: PANJA, Debabrata, NL-3448 BD Woerden (NL)
(74) Representative: Akzo Nobel IP Department
(86) International application number: PCT/EP2014/070075
(87) International publication number: WO 2015/044064

(56) References cited:
- EP-A1- 1 420 233
- EP-A2- 2 026 052
- WO-A1-01/75406
- WO-A1-2004/046670
- JP-A- 2009 124 608
- US-A- 4 966 461
- Werner Schultze: "Farbenlehre und Farbenmessung", 1 January 1966 (1966-01-01), Springer Verlag, Berlin, XP007922559, pages 26-35, the whole document
- INGMAR LISSNER ET AL: "Toward a Unified Color Space for Perception-Based Image Processing", IEEE TRANSACTIONS ON IMAGE PROCESSING, IEEE SERVICE CENTER, PISCATAWAY, NJ, US, vol. 21, no. 3, 1 March 2012 (2012-03-01), pages 1153-1168, XP011420271, ISSN: 1057-7149, DOI: 10.1109/TIP.2011.2163522

## Description

The invention relates to a process for arranging a plurality of colours or coloured objects in a defined sequence. The invention also relates to a colour chart prepared in accordance with the process, and to an apparatus adapted to carry out the process.

WO 01/75406 A describes a method for preparing a colour chart comprising the steps of defining a reference colour, specifying a range of colours from said reference colour, each colour being spaced by integral multiples of a preselected colour difference value from the other colour, the range spanning the colour space between the reference colour and some other colour.

JP2009124608 describes an image processing apparatus capable of producing a color sample in which continuity as a whole is better maintained. The apparatus contains a converting part that converts an RGB signal value inputted as a specified color for adjustment into a signal value (L*, a*, b*) in a uniform color space (S201). A generating part calculates a signal group so that surrounding colors of the converted signal value include a constant space on a three-dimension space (S202). Then, an array part arranges a plurality of patches so that a color difference between adjacent patches on a paper becomes the smallest using the calculated signal group (S203). The converting part converts the signal group into an RGB color space (S204), and transmits the signal to an image output apparatus (S205).

A drawback of the above known process is that the colours are spaced by integral multiples of a preselected colour difference value from the other colour. Hence, the process is not suitable for preparing a colour chart or arranging colours having random colour difference values from the other ones.

In particular when similar colours exhibit small variations in more than one dimension, for example lightness, chroma, and hue, there is no straightforward way to determine a sequence in which such colours should be arranged.

Furthermore, in many existing colour documentations for paints, such as car repair paints, the colours are sorted by manufacturer. Often two entirely different manufacturers produce colours that the human eye cannot distinguish. In such cases one of the duplicates can be removed from the documentation, reducing documentation size and production cost.

The textbook "Farbenlehre und Farbenmessung" by Werner Schulze, published 1966 by Springer Verlag, discusses on pages 26 to 35 systems for ordering colours. The CIELAB system, the DIN system, and the Munsell system are mentioned. In these systems the individual colours are assigned a position in a three-dimensional colour space. Also, two-dimensional projections of the three-dimensional colour space are known.

An important problem when producing colour charts or colour fan decks is that the selected colours must be put in a sequence. By definition, a sequence is one-dimensional, i.e. the first and the last colour in the sequence have only one neighbouring colour, and all other colours have two neighbouring colours. The existing three-dimensional systems for ordering colours give no guidance on how to put the colours in a one-dimensional sequence.

Providing a good one-dimensional ordering of colours, i.e. a sequence, is important for making the series of colours have a natural flow, which provides an aesthetically pleasing order.

Currently, the process of obtaining a one-dimensional ordering, i.e. a sequence, is based on the visual perception of a test panel of persons. This has several drawbacks, because it consumes a lot of time, the reproducibility is poor, and the ordering result depends on the subjective colour perception of the persons of the panel.

Hence, there is an ongoing need for improved processes of arranging colours or coloured objects which address the above-mentioned issues. In particular, a process is sought which is suitable for reliably and objectively converting an arrangement of colours in a multi-dimensional colour space to a one-dimensional sequence of colours.

The present invention provides a process for arranging a plurality of colours or coloured objects in a defined sequence so that each colour or coloured object has at least one neighbouring colour or coloured object, comprising the steps of
a) assigning all colours or coloured objects a position in an at least three-dimensional colour space,
b) assigning all neighbouring colours or coloured objects a colour difference value corresponding to the length of a vector connecting the neighbouring colours in the colour space,
c) assigning a direction to every vector in the colour space connecting two neighbouring colours or coloured objects,
d) arranging the sequence of colours or coloured objects in such a way that the overall sum of
   i. all colour difference values over the sequence and
   ii. all direction difference values of two consecutive vectors
is minimized, and wherein a weight factor x is assigned to the sum of all colour difference values and a weight factor y is assigned to the sum of all direction difference values of two consecutive vectors prior to minimization of the overall sum, and wherein neither x nor y is zero.

The process of the invention makes it possible to arrange colours in a sequence in a quick, reproducible, and objective way, without the need for persons and their subjective visual perception.

The process of the invention allows for a logical and clearly defined sequence of colours having random colour difference values from the other ones, and there is no need to define a reference colour. The process is also very suitable for ordering in a sequence colours or coloured objects of similar colours having small variations in more than one dimension, for example lightness, chroma, and hue. When used for colour documentation for paints, such as car repair paints, it is possible to eliminate duplicates resulting from the same colour being used by different car manufacturers.

For the avoidance of doubt it is emphasized that the expression "sequence" relates to one-dimensionally ordered arrangement of members, wherein the first and the last member in the sequence have only one neighbouring member, and all other members have two neighbouring members.

The process is suitable for arranging colours or coloured objects, for example colours on a colour chart representing colours of paint or toners, ink, or other materials which are typically available in a variety of colours. The colours may be arranged in printed form on a chart. Alternatively, the colours may also be arranged on an electronic display screen of a computer or mobile device. The process may also be used to arrange a plurality of coloured objects. Coloured objects may be samples of paint-coated substrates, such as so-called colour chips, or samples of other coloured materials, for example textiles, fabrics, leather, and the like.

In the first step of the process, all colours or coloured objects to be arranged are assigned a position in an at least three-dimensional colour space. The process of the invention is suitable for arranging colours, or objects coated with colours which show variations in less than three dimensions, such as in grayscale (where the variation in colour is only in ***L**** value, i.e., in one dimension), or colours with negligible variation in ***L**** values (where the variation in colour is in ***a**** and ***b**** values, i.e., in two dimensions.

A wide range of colours can be created by the subtractive primary colours of pigments (cyan (C), magenta (M), yellow (Y), and black (K)). Those colours then define a specific colour space. To create a three-dimensional representation of a colour space, one can assign the amount of magenta colour to the representation's X axis, the amount of cyan to its Y axis, and the amount of yellow to its Z axis. The resulting three-dimensional space provides a unique position for every possible colour that can be created by combining those three pigments.

However, this is not the only possible colour space. For instance, when colours are displayed on a computer monitor, they are usually defined in the RGB (red, green, and blue) colour space. This is another way of making nearly the same colours (limited by the reproduction medium, such as phosphors (CRT) or filters and backlight (LCD)), and red, green, and blue can be considered as the X, Y, and Z axes. Another way of making the same colours is to use their Hue (θ axis), their Chroma (r axis), and their brightness Value (Z axis). This is called the LCh colour space. Many colour spaces can be represented as three-dimensional values in this manner, but some have more, or fewer dimensions.

In one embodiment, the three-dimensional colour space is the CIELAB colour space.

CIE *L***a***b** (CIELAB) is the most complete colour space specified by the International Commission on Illumination (French *Commission internationale de l'eclairage,* hence its *CIE* initialism). It describes all the colours visible to the human eye and was created to serve as a device-independent model to be used as a reference.

The three coordinates of CIELAB represent the lightness of the colour (***L**** = 0 yields black and ***L**** = 100 indicates diffuse white; specular white may be higher), its position between red/magenta and green (***a****, negative values indicate green while positive values indicate magenta), and its position between yellow and blue (***b****, negative values indicate blue and positive values indicate yellow).

The process of the invention is also suitable for arranging so-called effect colours, or objects coated with effect colours, or objects having a texture.

In the case of effect colours, one or more texture coordinates can be added to the three colour coordinates. In this case, for example a texture difference may be added to the colour difference, comprising the difference in values for each of the texture-related properties. Similarly, the combined colour and texture difference between colours can then be expressed as vectors in a four- or even higher dimensional space. Renormalization and calculating difference vectors can be mathematically expressed by similar expressions to those used for the untextured case.

Coatings comprising metal particles, such as aluminium flakes, may be mentioned as an example. For such coatings, the texture or coarseness of the aluminium flakes defines a relevant feature of the visual properties. Therefore, in one embodiment, the colour space includes the dimension coarseness, and all colours are assigned a coarseness value. Typically, use will then be made of a three- or four-dimensional colour space. Other texture-related properties may additionally or alternatively be added as a dimension to the colour space.

After all colours or coloured objects have been assigned a position in the at least three-dimensional colour space, colour difference values are assigned to all neighbouring colours or coloured objects in the colour space. The colour difference value of two neighbouring colours corresponds to the length of a vector connecting the two neighbouring colours in the colour space.

In a further step, a direction is assigned to every vector in the colour space connecting two neighbouring colours.

The colours or coloured objects are then arranged in a sequence in such a way that the overall sum of
i. all colour difference values of neighbouring colours over the sequence and
ii. all direction difference values of two consecutive vectors
is minimized. A weight factor x is assigned to the sum of all colour difference values and a weight factor y is assigned to the sum of all direction difference values prior to minimization of the overall sum. Use of the weight factors influences the sequence of colours.

Minimizing the sum of all colour difference values alone corresponds to the shortest path in the at least three-dimensional colour space connecting all colours to be arranged. This describes a situation wherein the weight factor y is zero. In many cases, this may lead to a satisfactory sequence of colours or coloured objects.

Minimizing the sum of all direction difference values of two consecutive colours alone corresponds to a situation wherein so-called U-turns in the path are minimized. This means that it is preferred for similar colours to remain in close neighbourhood in the sequence. This describes a situation wherein the weight factor x is zero. In many cases, this may lead to a satisfactory sequence of colours or coloured objects.

In accordance with the present invention, neither x nor y is zero.

The process is preferably implemented on a computer programmed to arrange a plurality of colours in a sequence according to the process of the invention.

As an example, colour difference values may be calculated based on reflection data measured for the plurality of colours or coloured objects. This is preferably done by converting the reflection data of each colour into so-called CIE-Lab colour coordinates. For each pair of colours, the colour difference can be calculated from the CIE-Lab coordinates by using one of a series of mathematical expressions that are known from literature. Examples of these are the DEab and CIEDE2000 that are mentioned in textbooks on colorimetry, such as Roy S. Berns: "Billmeyer and Saltzman's Principles of Color Technology" (3rd Edition).

For calculating direction difference values of consecutive vectors, use may be made of the fact that the difference between colours can be expressed as three-dimensional vectors, because colour coordinates can be expressed as points in three-dimensional colour spaces such as CIE-Lab space. After renormalizing the colour difference vectors between colours, the magnitude of the difference vector between consecutive vectors can be used as a measure for the inconsistency in which colors are ordered.

Since the variable in the minimization process is the sequence of these colours, or a path defined in the colour space, there are several well-known algorithms available for the minimization process such as Genetic Algorithm, Nearest Neighbour Algorithm, or Simulated Annealing Algorithm (associated with the formulation of the minimization process as a Travelling Salesman Problem defined on the sequence of colours in the colour space).

The result of the minimization process can be used to produce a printed colour chart. Alternatively, the result can be used to produce a colour chart on an electronic display screen, for example on a computer display or the display of a mobile device, like a smart phone or tablet computer.

The result can also be used to arrange a plurality of painted objects having different colours.

The colours may represent paint colours, for example a range of available vehicle repair paint colours. Arranging paint colours in a colour chart according to the process facilitates the selection of the most suitable or best matching paint.

With the process of the invention it is possible to create a colour chart, wherein a plurality of colours is arranged in a sequence according to the process of the invention.

The invention further relates to an apparatus for displaying a colour chart, comprising a computer device and an electronic display screen under the control of the computer device, wherein the computer is programmed to arrange a plurality of colours in a sequence according to the process of the invention. In one embodiment, the colours correspond to colours of paint recipes stored in the memory of the computer.

## Claims

1. A process for arranging a plurality of colours or coloured objects in a defined one-dimensional sequence, i.e. the first and the last colour in the sequence have only one neighbouring colour, and all other colours have two neighbouring colours, so that each colour or coloured object has at least one neighbouring colour or coloured object, comprising the steps of
a) assigning all colours or coloured objects a position in an at least three-dimensional colour space,
b) assigning all neighbouring colours or coloured objects a colour difference value corresponding to the length of a vector connecting the neighbouring colours in the colour space,
c) assigning a direction to every vector in the colour space connecting two neighbouring colours or coloured objects,
d) arranging the sequence of colours or coloured objects in such a way that the overall sum of
i. all colour difference values over the sequence and
ii. all direction difference values of two consecutive vectors
is minimized, and wherein a weight factor x is assigned to the sum of all colour difference values and a weight factor y is assigned to the sum of all direction difference values of two consecutive vectors prior to minimization of the overall sum, and wherein neither x nor y is zero.

2. The process according to claim 1, wherein the at least three-dimensional colour space has the dimensions of lightness, chroma, and hue.

3. The process according to claim 1, wherein the three-dimensional colour space is the CIELAB colour space.

4. The process according to any one of the preceding claims, wherein the process is implemented for effect colours having a coarseness value, and wherein the colour space includes the dimension coarseness.

5. The process according to any one of the preceding claims, wherein the process is implemented to produce a printed colour chart or a colour chart on an electronic colour display screen.

6. The process according to any one of the preceding claims, wherein the process is implemented to arrange a plurality of painted objects.

7. The process according to any one of the preceding claims, wherein the colours represent paint colours.

8. The process according to claim 7, wherein the colours represent vehicle repair paint colours.

9. An apparatus for displaying a colour chart, comprising a computer device and an electronic colour display screen under the control of the computer device, and wherein the computer device is programmed to arrange a plurality of colours in a sequence according to the process of any one of the preceding claims 1 to 8.

10. The apparatus according to claim 9, wherein the colours correspond to colours of paint recipes stored in the memory of the computer device.

## Patentansprüche

1. Verfahren zum Anordnen von mehreren Farben oder farbigen Gegenständen in einer definierten eindimensionalen Sequenz, d. h. die erste und die letzte Farbe in der Sequenz haben nur eine benachbarte Farbe und alle anderen Farben haben zwei benachbarte Farben, so dass jede Farbe bzw. jeder farbige Gegenstand mindestens eine benachbarte Farbe bzw. einen benachbarten farbigen Gegenstand haben, bei dem man:
a) allen Farben bzw. farbigen Gegenständen eine Position in einem mindestens dreidimensionalen Farbenraum zuordnet,
b) allen benachbarten Farben bzw. farbigen Gegenständen einen Farbdifferenzwert zuordnet, der der Länge eines die benachbarten Farben in dem Farbenraum verbindenden Vektors entspricht,
c) jedem zwei benachbarte Farben bzw. farbige Gegenstände verbindenden Vektor in dem Farbenraum eine Richtung zuordnet,
d) die Sequenz von Farben bzw. farbigen Gegenständen so anordnet, dass die Gesamtsumme von
i. allen Farbdifferenzwerten über die Sequenz und
ii. allen Richtungsdifferenzwerten von zwei aufeinanderfolgenden Vektoren
minimiert wird, und wobei vor der Minimierung der Gesamtsumme der Summe aller Farbdifferenzwerte ein Gewichtungsfaktor x zugeordnet wird und der Summe aller Richtungsdifferenzwerte von zwei aufeinanderfolgenden Vektoren ein Gewichtungsfaktor y zugeordnet wird und wobei weder x noch y gleich null ist.

2. Verfahren nach Anspruch 1, wobei der mindestens dreidimensionale Farbenraum die Dimensionen Helligkeit, Buntheit und Farbton aufweist.

3. Verfahren nach Anspruch 1, wobei es sich bei dem dreidimensionalen Farbenraum um den CIELAB-Farbenraum handelt.

4. Verfahren nach einem der vorhergehenden Ansprüche, wobei das Verfahren für Effektfarben mit einem Grobheitswert durchgeführt wird und wobei der Farbenraum die Dimension Grobheit einschließt.

5. Verfahren nach einem der vorhergehenden Ansprüche, wobei das Verfahren zur Herstellung einer gedruckten Farbkarte oder einer Farbkarte auf einem elektronischen Farbenanzeigebildschirm durchgeführt wird.

6. Verfahren nach einem der vorhergehenden Ansprüche, wobei das Verfahren zur Anordnung von mehreren lackierten Gegenständen durchgeführt wird.

7. Verfahren nach einem der vorhergehenden Ansprüche, wobei die Farben Lackfarben repräsentieren.

8. Verfahren nach Anspruch 7, wobei die Farben Fahrzeugreparaturlackfarben repräsentieren.

9. Apparatur zum Anzeigen einer Farbkarte, umfassend eine Computervorrichtung und einen elektronischen Farbenanzeigebildschirm unter der Steuerung der Computervorrichtung, wobei die Computervorrichtung zum Anordnen von mehreren Farben in einer Sequenz gemäß dem Verfahren nach einem der Ansprüche 1 bis 8 programmiert ist.

10. Apparatur nach Anspruch 9, wobei die Farben Farben von Lackrezepturen, die im Speicher der Computervorrichtung gespeichert sind, entsprechen.

## Revendications

1. Procédé d'agencement d'une pluralité de couleurs ou d'objets colorés dans une séquence unidimensionnelle définie, autrement dit la première et la dernière couleur de la séquence n'ont qu'une seule couleur voisine, et toutes les autres couleurs ont deux couleurs voisines, de telle sorte que chaque couleur ou chaque objet coloré a au moins une couleur voisine ou un objet coloré voisin, comprenant les étapes suivantes :
a) attribution à toutes les couleurs ou tous les objets colorés d'une position dans un espace de couleur au moins tridimensionnel,
b) attribution à toutes les couleurs voisines ou tous les objets colorés voisins d'une valeur de différence de couleur correspondant à la longueur d'un vecteur reliant les couleurs voisines dans l'espace de couleur,
c) attribution d'une direction à chaque vecteur dans l'espace de couleur reliant deux couleurs voisines ou deux objets colorés voisins,
d) agencement de la séquence de couleurs ou d'objets colorés de manière à ce que la somme globale de
i. toutes les valeurs de différence de couleur sur la séquence et
ii. toutes les valeurs de différence de direction de deux vecteurs consécutifs
soit minimisée, et dans lequel un facteur de pondération x est attribué à la somme de toutes les valeurs de différence de couleur et un facteur de pondération y est attribué à la somme de toutes les valeurs de différence de direction de deux vecteurs consécutifs avant la minimisation de la somme globale, et dans lequel ni x ni y ne valent zéro.

2. Procédé selon la revendication 1, dans lequel l'espace de couleur au moins tridimensionnel a comme dimensions la luminosité, la saturation, et la teinte.

3. Procédé selon la revendication 1, dans lequel l'espace de couleur tridimensionnel est l'espace de couleur CIELAB.

4. Procédé selon l'une quelconque des revendications précédentes, le procédé étant mis en oeuvre pour des couleurs à effet ayant une valeur de grain, et dans lequel l'espace de couleur comporte le grain dimensionnel.

5. Procédé selon l'une quelconque des revendications précédentes, le procédé étant mis en œuvre pour produire un nuancier imprimé ou un nuancier sur un écran électronique d'affichage de couleurs.

6. Procédé selon l'une quelconque des revendications précédentes, le procédé étant mis en œuvre pour agencer une pluralité d'objets peints.

7. Procédé selon l'une quelconque des revendications précédentes, dans lequel les couleurs représentent des couleurs de peinture.

8. Procédé selon la revendication 7, dans lequel les couleurs représentent des couleurs de peinture de réparation de véhicule.

9. Appareil destiné à afficher un nuancier, comprenant un dispositif informatique et un écran électronique d'affichage de couleurs sous le contrôle du dispositif informatique, et dans lequel le dispositif informatique est programmé pour agencer une pluralité de couleurs dans une séquence selon le procédé de l'une quelconque des revendications 1 à 8 précédentes.

10. Appareil selon la revendication 9, dans lequel les couleurs correspondent à des couleurs de recettes de peinture stockées dans la mémoire du dispositif informatique.
